# EUROPEAN PATENT APPLICATION

(11) **EP 2 647 858 A2**
(43) Date of publication of application: **09.10.2013**
(21) Application number: 11845282.0
(22) Date of filing: 29.11.2011
(51) Int. Cl.: F16C 33/12, F16C 33/16, B22F 3/12, B22F 3/26

(54) **SINTERED BEARING AND PREPARATION METHOD THEREOF**

(30) Priority: 29.11.2010 KR 20100119557
(71) Applicant: Hyundai Steel Company, Incheon 401-040 (KR); Orient Precision Industries Inc., Gyeonggi-do 462-120 (KR)
(72) Inventor: TAE, Soon-Jae, Dangjin-gun Chungcheongnam-do 343-827 (KR); YOON, Tae-Il, Pyeongtaek-si Gyeonggi-do 451-885 (KR); KIM, Hae-Sik, Gyeonggi-do 462-120 (KR); KIM, Hyun-Tae, Gyeonggi-do 462-120 (KR); CHUNG, Chun-Kyun, Gyeonggi-do 462-120 (KR); CHOI, Tae-Young, Gyeonggi-do 462-120 (KR); CHU, Gyo-Jin, Gyeonggi-do 462-120 (KR)
(74) Representative: Viering, Jentschura & Partner
(86) International application number: PCT/KR2011/009164
(87) International publication number: WO 2012/074276

(57) **Abstract**

The present invention relates to a sintered bearing and a preparation method thereof, wherein the method comprises: a step for forming a mixed powder by mixing metal powder, kish graphite, and lubricant; forming a molded body by applying pressure to the mixed powder; forming a sintered body by sintering the molded body; and impregnating the sintered body in oil. The invention is prepared by adding 0.01-10 parts by weight of kish graphite to metal powder and thus provides excellent abrasion resistance, strength, and self lubricity.

## Description

### Technical Field

The present invention relates to a sintered bearing and a method of manufacturing the same and, more particularly, to a sintered bearing using kish graphite which is a byproduct of iron production and to a method of manufacturing the same. This application claims the benefit of Korean Patent Application No. 10-2010-0119557, filed November 29, 2010, which is hereby incorporated by reference in its entirety into this application.

### Background Art

Kish graphite is one of many byproducts generated from integrated iron and steel making processes in iron mills, including a blast furnace process, an iron making process, a steel making process, etc.

Kish graphite is mainly generated in blast furnaces, KR facilities, TCC plants, slag treatment plants, etc.

### Disclosure

### Technical Problem

An object of the present invention is to provide a sintered bearing and a method of manufacturing the same, in which kish graphite which is a byproduct of iron production is added to metal powder, thus manufacturing a sintered bearing which is improved in durability, lubricity, etc.

### Technical Solution

In order to accomplish the above object, the present invention provides a sintered bearing, comprising metal powder, kish graphite, and a lubricant.

The sintered bearing may comprise, based on the total weight thereof, 0.01 ∼ 10 parts by weight of the kish graphite, 0.01 ∼ 1.0 parts by weight of the lubricant, and a balance of the metal powder.

The metal powder may be one or more selected from the group consisting of a pure iron system, an iron-copper system, an iron-carbon system, an iron-carbon-copper system, a bronze system, and an iron-carbon-copper-nickel system.

The kish graphite may be a byproduct of iron production.

The present invention provides a method of manufacturing a sintered bearing, comprising mixing metal powder, kish graphite, and a lubricant, thus forming a powder mixture; applying pressure to the powder mixture, thus forming a molded body; sintering the molded body, thus forming a sintered body; and impregnating the sintered body with oil.

The powder mixture may comprise, based on the total weight thereof, 0.01 ∼ 10 parts by weight of the kish graphite, 0.01 ∼ 1.0 parts by weight of the lubricant, and a balance of the metal powder.

The metal powder may be one or more selected from the group consisting of a pure iron system, an iron-copper system, an iron-carbon system, an iron-carbon-copper system, a bronze system, and an iron-carbon-copper-nickel system.

The kish graphite may be in a powder form having a particle size of 50 mesh or less.

The kish graphite may have a purity of 90 - 100% after refining.

The lubricant may be any one or a mixture of two or more selected from the group consisting of zinc stearate (C₃₆H₇₀O₄Zn), Acrawax (C₃₈H₇₆N₂O₂), and Kenolube paraffin.

The forming the molded body may be performed by subjecting the powder mixture to pressing at a pressure of 50 - 350 MPa at room temperature.

The forming the molded body may be performed so that the molded body has a compact density of 5.4 ∼ 7.0 g/cm³.

The forming the sintered body may be performed at 850 - 1300°C under atmospheric pressure. The forming the sintered body may be performed for 1 - 6 hr.

The impregnating with oil may be performed at 50 - 150°C in a vacuum.

### Advantageous Effects

According to the present invention, a sintered bearing is manufactured by adding 0.01 - 10 parts by weight of kish graphite to metal powder, thus exhibiting superior abrasion resistance, strength and self-lubricity.

In particular, kish graphite having excellent slipping properties enables self-lubricating action of the sintered bearing upon initial operation, thus reducing the friction between a bearing shaft and a pin, thereby facilitating the initial operation and remarkably improving abrasion resistance of the sintered bearing.

Also, kish graphite having high thermal conductivity can rapidly emit the frictional heat of the sintered bearing, ultimately decreasing abrasion loss.

Therefore, a high-quality sintered bearing can be supplied to automobile industries and a variety of equipment industries, and is favorable in terms of reducing the manufacturing cost and is eco-friendly, by virtue of the recycling of kish graphite which is a byproduct of iron production.

### Description of Drawings

FIG. 1 is a graph illustrating the coefficient of friction upon initial operation of the sample of Table 1;
FIG. 2 is a graph illustrating the coefficient of friction upon initial operation of the sample of Table 2;
FIG. 3 is a graph illustrating the coefficient of friction upon initial operation of the sample of Table 3;
FIG. 4 is a graph illustrating the coefficient of friction upon initial operation of the sample of Table 4;
FIG. 5 is a graph illustrating the hardness and abrasion loss of the samples of Examples 1 to 4 depending on changes in the amount of added kish graphite and in the density of the sample;
FIG. 6 is a graph illustrating the hardness of the sintered sample depending on the amount of added kish graphite;
FIG. 7 is a graph illustrating the coefficient of friction upon initial operation of the sample of Table 5;
FIG. 8 is a graph illustrating the abrasion loss based on a difference in the weight of the sample before and after an abrasion test for 1 hr; and
FIG. 9 is a graph illustrating the hardness of the sintered sample depending on the amount of added kish graphite.

### Best Mode

Hereinafter, a detailed description will be given of the present invention.

According to the present invention, a sintered bearing includes metal powder, kish graphite, and a lubricant.

The sintered bearing includes, based on the total weight thereof, 0.01 ∼ 10 parts by weight of kish graphite, 0.01 ∼ 1.0 parts by weight of the lubricant, and a balance of the metal powder.

The sintered bearing is a mechanical part used to rotate a shaft which is fixed at a predetermined position, in automobiles, electronic products, industrial machinery, construction machinery, etc., while supporting the weight of the shaft and the load applied to the shaft. The sintered bearing is manufactured by adding kish graphite to metal powder so as to improve durability, lubricity, etc.

Kish graphite is a byproduct of iron production.

Kish graphite is dispersed in a metallic bearing upon sintering, thereby increasing strength of the bearing, and functions as a solid lubricant so as to enable self-lubricating action of the sintered bearing upon initial operation at which time oil is not discharged.

Artificial graphite and natural graphite, which are not metal components but are inorganic materials, function to interfere with and suppress the sintering of a metallic bearing. Because of a large specific volume, even when only ones of wt% of the above graphite in a powder form is contained in metal, it is difficult to perform molding and sintering of a bearing.

However, kish graphite has higher crystallinity compared to typical artificial graphite and has a smaller lamellar thickness compared to natural graphite. As a result of analyzing X-ray diffraction, the crystalline lattice gap of kish graphite is 3.359 Å, which is similar to the theoretical value of graphite, and the crystallinity calculated by the X-ray diffraction bandwidth of d₍₀₀₂₎ plane is measured to be 178 Å.

Also, kish graphite has high thermal conductivity and thus rapidly emits fractional heat of the sintered bearing, increases abrasion resistance of the sintered bearing, and functions as a solid lubricant upon initial operation, thus exhibiting superior mechanical properties.

Kish graphite may include any kish graphite generated in iron mills, and may contain a variety of impurities such as iron, iron oxides, non-metal oxides, dust, etc., depending on the generation site, and thus the trapped and collected kish graphite is used after refining. Chemical refining treatment includes froth flotation and pickling.

Preferably, kish graphite, which may be easily subjected to trapping, collection and refining and has a purity of 10% or more, is used. For example, kish graphite generated in KR (mechanical stirring desulfurization) facilities and TCC (molten iron treatment) plants is particularly useful. Kish graphite generated in KR facilities has a density of 2.8 g /cm³ and a purity of 90 - 98%.

Kish graphite generated in KR facilities includes large dust particles and SiO₂ particles, but its purity is as high as 90% or more, and thus only a mechanical separation process (separation depending on size) is performed without additional chemical refining treatment, making it possible to remove large dust particles and SiO₂ particles.

Kish graphite generated in TCC plants has a purity of about 60% and includes iron and iron oxides as impurities. Kish graphite generated in TCC plants is preferably subjected to chemical refining treatment and sorting, so that the purity thereof is controlled to about 90% or more. The refined kish graphite is sorted to a size of 50 mesh (300 *µ*m) or less before use, and the recovery rate thereof is 90% or more. The large particles separated via sorting may be reused via additional grinding.

As such, the purity of kish graphite and the composition of impurities were analyzed using EPMA (Electron Probe Micro Analyzer).

Kish graphite is contained in an amount of 0.01 ∼ 10 parts by weight based on the total weight of the sintered bearing. If the amount of kish graphite is less than 0.01 parts by weight based on the total weight of the sintered bearing, improvements in strength of the sintered bearing and self-lubricating action thereof are insignificant. In contrast, if the amount thereof exceeds 10 parts by weight, the strength of the sintered bearing may increase but sinterability may deteriorate due to an excess of kish graphite, undesirably lowering abrasion resistance.

Kish graphite is preferably contained in an amount of 0.5 - 5.0 parts by weight based on the total weight of the sintered bearing, so as to enhance strength of the sintered bearing and to improve self-lubricating action and sinterability. The reason why the amount of kish graphite is limited as described above is that the use of kish graphite exceeding 5.0 parts by weight depending on the composition of metal powder may result in deteriorated sinterability undesirably lowering abrasion resistance.

The metal powder is any one or a mixture of two or more selected from the group consisting of a pure iron system, an iron-copper system, an iron-carbon system, an iron-carbon-copper system, a bronze system, and an iron-carbon-copper-nickel system. The metal powder is a main component of the sintered bearing, and pure metal or a metal alloy is used in order to ensure mechanical strength such as abrasion resistance, hardness, etc.

The lubricant plays a role in lubricating the bearing. The lubricant is used in an amount of 0.01 ∼ 1.0 parts by weight based on the total weight of the sintered bearing. When the amount of the lubricant falls in the above range, strength is not decreased and lubrication effects may be exhibited.

The lubricant may be any one or a mixture of two or more selected from the group consisting of zinc stearate (C₃₆H₇₀O₄Zn), Acrawax (C₃₈H₇₆N₂O₂), and Kenolube paraffin.

The method of manufacturing the sintered bearing includes mixing metal powder, kish graphite, and a lubricant, thus forming a powder mixture, applying pressure to the powder mixture, thus forming a molded body, sintering the molded body, thus forming a sintered body, and impregnating the sintered body with oil.

Upon forming the powder mixture, the metal powder is mixed with kish graphite and the lubricant, thus obtaining the powder mixture. Kish graphite is contained in an amount of 0.01 ∼ 10 parts by weight based on the total weight of the powder mixture, the lubricant is contained in an amount of 0.01 ∼ 1.0 parts by weight based on the total weight of the powder mixture, and the balance is metal powder.

The reason why kish graphite is used is that high-quality flake graphite having very high crystallinity contained in kish graphite is recycled, and thus kish graphite is refined so as to use kish graphite having a purity of 90% or more. If the purity of kish graphite is less than 90%, improvements in abrasion resistance, lubricity, and strength of the sintered bearing are insignificant.

Kish graphite in a powder form having a particle size of 50 mesh or less is used to facilitate the dispersion of carbon upon sintering. To this end, refined kish graphite is sorted using a sieve having an opening size of 50 mesh (300 *µ*m). Mesh is a unit which indicates the opening of a sieve or the particle size.

The metal powder is any one or a mixture of two or more selected from the group consisting of a pure iron system, an iron-copper system, an iron-carbon system, an iron-carbon-copper system, a bronze system, and an iron-carbon-copper-nickel system.

The lubricant may be any one or a mixture of two or more selected from the group consisting of zinc stearate (C₃₆H₇₀O₄Zn), Acrawax (C₃₈H₇₆N₂O₂), and Kenolube paraffin.

Upon forming the powder mixture, a mixing process may be performed using a super mixer or a high-speed mixer, and the mixing rate may be set to 50 ∼ 100 rpm and the mixing time may be set to 1 ∼ 120 min in order to accomplish homogeneous mixing.

Upon forming the molded body, the pressure applied to the powder mixture is set to 50 ∼ 350 MPa using a press of 10 ∼ 30 tons, and pressing at room temperature is performed, thus obtaining the molded body having a compact density of 5.4 ∼ 7.0 g/cm³ and an internal porosity of 10 ~ 30 vol% relative to the total volume ratio.

If the pressure is less than 50 MPa, the molded body is not formed. In contrast, if the pressure exceeds 350 MPa, the internal porosity of the resulting sintered body is remarkably decreased, making it difficult to impregnate the sintered body with oil. Also, if the compact density is less than 5.4 g/cm³, the molded body is not formed. In contrast, if the density exceeds 7.0 g/cm³, porosity may decrease, making it impossible to impregnate the sintered body with oil.

The molded body may be sintered at 850 ∼ 1300°C under atmospheric pressure for 1 ∼ 6 hr. Upon sintering the molded body, kish graphite is dispersed in the sintered body, so that the sintered body is strengthened thus enhancing strength.

The sintering temperature 850°C corresponds to the minimum temperature able to form the sintered body, and it is unnecessary to use a high temperature exceeding 1300°C. If the sintering time is less than 1 hr, the sintering effect becomes insignificant. In contrast, if the sintering time exceeds 6 hr, the internal porosity of the sintered body may decrease due to excessive sintering.

The sintered bearing has pores therein due to the sintering, and oil functions to impregnate the pores of the sintered bearing therewith, thus increasing the strength of the sintered bearing. Impregnation with oil is performed in a vacuum at 50 ∼ 150°C.

Upon impregnation with oil, if the temperature is lower than 50°C, there is no oil fluidity, making it impossible to perform impregnation. In contrast, if the temperature is higher than 150°C, deformation of oil components may occur.

The method of manufacturing the sintered bearing according to the present invention enables recycling of waste kish graphite and is thus eco-friendly, and enables the abrasion resistance of the sintered bearing to be increased and the self-lubricity to be ensured.

A better understanding of the present invention may be obtained via the following examples which are set forth to illustrate, but are not to be construed as limiting the present invention.

### <Example 1>

NC100.24 powder as pure iron powder, kish graphite powder having a particle size of 300 *µ*m or less, and zinc stearate as a lubricant were mixed, thus preparing a powder mixture of Table 1 below. For reference, NC100.24 is the trade name of pure iron powder available from Hoganas.

Mixing was performed using a high-speed mixer at a rotation rate of 100 rpm for 10 min. The prepared powder mixture was subjected to pressing at room temperature using a 20-ton press, thus obtaining an abrasion resistance test sample having a compact density of 5.6 g/cm³ with a disc shape.

The disc shaped sample was sintered at 1000°C for 3 hr.

Table 1 below shows the composition of the sample of Example 1.

**[Table 1]**

| NC100.24 (wt%) | Kish graphite (wt%) | Zinc stearate (wt%) | Density (g/cm³) | Note |
|---|---|---|---|---|
| 99.2 | 0 | 0.8 | 5.6 | |
| 98.7 | 0.5 | 0.8 | 5.6 | |
| 98.2 | 1.0 | 0.8 | 5.6 | |
| 96.2 | 3.0 | 0.8 | 5.6 | |
| 94.2 | 5.0 | 0.8 | 5.6 | |
| 93.2 | 6.0 | 0.8 | 5.6 | Deteriorated Sinterability |

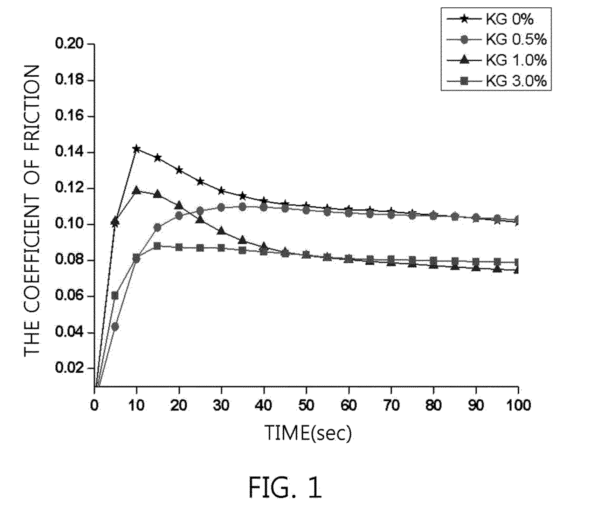

FIG. 1 illustrates the coefficient of friction upon initial operation of the sample of Table 1 (In FIG. 1, KG indicates kish graphite).

As is apparent from Table 1 and FIG. 1, when kish graphite was added in an amount of 3.0 wt%, the maximum initial coefficient of friction was 0.088, which was lower compared to when the amount of added kish graphite was 0, 0.5 and 1.0 wt%, thus exhibiting low abrasion of the sample upon initial operation.

Although not shown in FIG. 1, when the amount of kish graphite was 6.0 wt%, abrasion of the sample occurred easily, undesirably deteriorating the sinterability of the sample.

### <Example 2>

NC100.24 powder as pure iron powder, kish graphite powder having a particle size of 300 *µ*m or less, and zinc stearate as a lubricant were mixed, thus preparing a powder mixture of Table 2 below.

Mixing was performed using a high-speed mixer at a rotation rate of 100 rpm for 10 min. The prepared powder mixture was subjected to pressing at room temperature using a 20-ton press, thus obtaining an abrasion resistance test sample having a compact density of 6.0 g/cm³ with a disc shape.

The disc shaped sample was sintered at 1000°C for 3 hr.

Table 2 below shows the composition of the sample of Example 2.

**[Table 2]**

| NC100.24 (wt%) | Kish graphite (wt%) | Zinc stearate (wt%) | Density (g/cm³) | Note |
|---|---|---|---|---|
| 99.2 | 0 | 0.8 | 6.0 | |
| 98.7 | 0.5 | 0.8 | 6.0 | |
| 98.2 | 1.0 | 0.8 | 6.0 | |
| 96.2 | 3.0 | 0.8 | 6.0 | |
| 94.2 | 5.0 | 0.8 | 6.0 | |
| 93.2 | 6.0 | 0.8 | 6.0 | Deteriorated Sinterability |

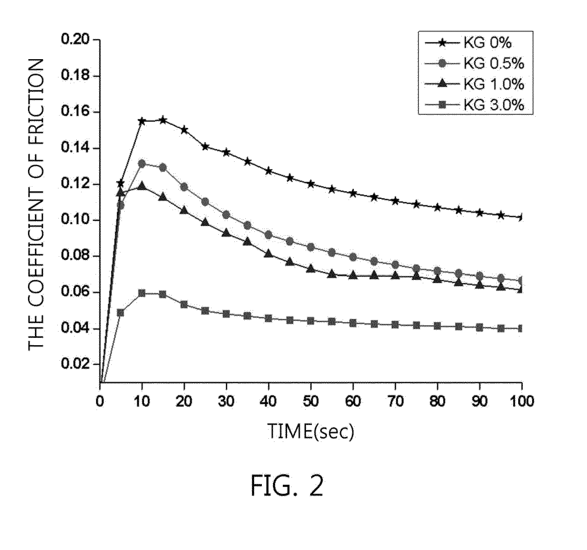

FIG. 2 illustrates the coefficient of friction upon initial operation of the sample of Table 2.

As is apparent from Table 2 and FIG. 2, the coefficient of friction upon initial operation of the sample was decreased in proportion to an increase in the amount of added kish graphite. When the amount of added kish graphite was 3.0 wt%, the maximum initial coefficient of friction was 0.059, which was lower compared to when the amount of added kish graphite was 0, 0.5 and 1.0 wt%, thus exhibiting low abrasion of the sample upon initial operation.

Although not shown in FIG. 2, when the amount of kish graphite was 6.0 wt%, abrasion of the sample occurred easily, undesirably deteriorating the sinterability of the sample.

### <Example 3>

NC100.24 powder as pure iron powder, kish graphite powder having a particle size of 300 *µ*m or less, and zinc stearate as a lubricant were mixed, thus preparing a powder mixture of Table 3 below.

Mixing was performed using a high-speed mixer at a rotation rate of 100 rpm for 10 min. The prepared powder mixture was subjected to pressing at room temperature using a 20-ton press, thus obtaining an abrasion resistance test sample having a compact density of 6.4 g/cm³ with a disc shape.

The disc shaped sample was sintered at 1000°C for 3 hr.

Table 3 below shows the composition of the sample of Example 3.

**[Table 3]**

| NC100.24 (wt%) | Kish graphite (wt%) | Zinc stearate (wt%) | Density (g/cm³) | Note |
|---|---|---|---|---|
| 99.2 | 0 | 0.8 | 6.4 | |
| 98.7 | 0.5 | 0.8 | 6.4 | |
| 98.2 | 1.0 | 0.8 | 6.4 | |
| 96.2 | 3.0 | 0.8 | 6.4 | |
| 94.2 | 5.0 | 0.8 | 6.4 | |
| 93.2 | 6.0 | 0.8 | 6.4 | Deteriorated Sinterability |

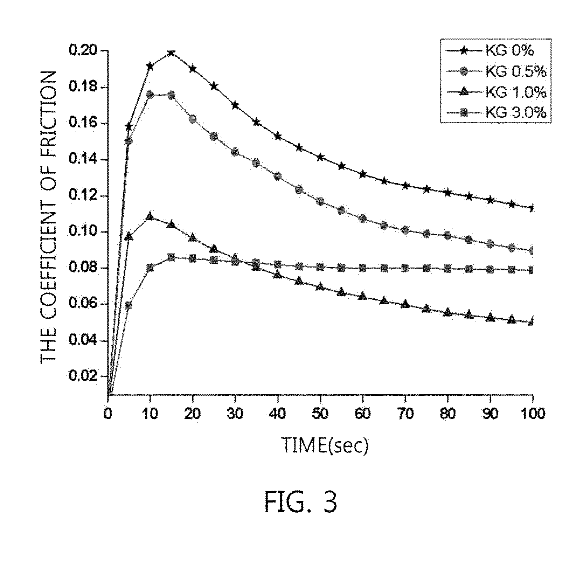

FIG. 3 illustrates the coefficient of friction upon initial operation of the sample of Table 3.

As is apparent from Table 3 and FIG. 3, the coefficient of friction upon initial operation of the sample was decreased in proportion to an increase in the amount of added kish graphite. When the amount of added kish graphite was 3.0 wt%, the maximum initial coefficient of friction was 0.086, which was lower compared to when the amount of added kish graphite was 0, 0.5 and 1.0 wt%, thus exhibiting low abrasion of the sample upon initial operation.

Although not shown in FIG. 3, when the amount of kish graphite was 6.0 wt%, abrasion of the sample occurred easily, undesirably deteriorating the sinterability of the sample.

### <Example 4>

NC100.24 powder as pure iron powder, kish graphite powder having a particle size of 300 *µ*m or less, and zinc stearate as a lubricant were mixed, thus preparing a powder mixture of Table 4 below.

Mixing was performed using a high-speed mixer at a rotation rate of 100 rpm for 10 min. The prepared powder mixture was subjected to pressing at room temperature using a 20-ton press, thus obtaining an abrasion resistance test sample having a compact density of 6.8 g/cm³ with a disc shape.

The disc shaped sample was sintered at 1000°C for 3 hr.

Table 4 below shows the composition of the sample of Example 4.

**[Table 4]**

| NC100.24 (wt%) | Kish graphite (wt%) | Zinc stearate (wt%) | Density (g/cm³) | Note |
|---|---|---|---|---|
| 99.2 | 0 | 0.8 | 6.8 | |
| 98.7 | 0.5 | 0.8 | 6.8 | |
| 98.2 | 1.0 | 0.8 | 6.8 | |
| 96.2 | 3.0 | 0.8 | 6.8 | |
| 94.2 | 5.0 | 0.8 | 6.8 | |
| 93.2 | 6.0 | 0.8 | 6.8 | Deteriorated Sinterability |

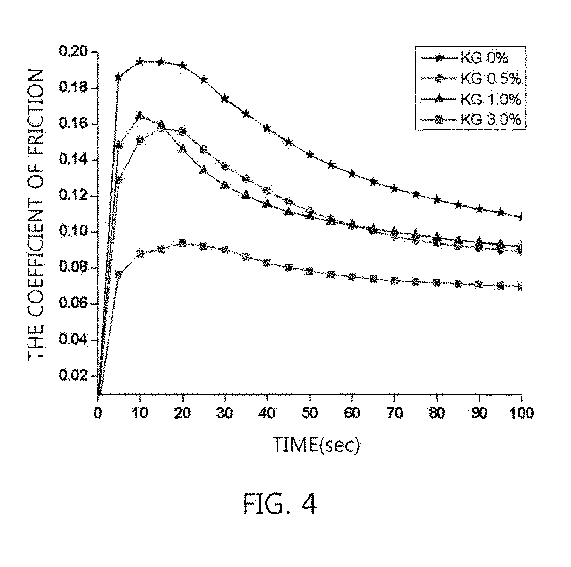

FIG. 4 illustrates the coefficient of friction upon initial operation of the sample of Table 4.

As is apparent from Table 4 and FIG. 4, when the amount of added kish graphite was 3.0 wt%, the maximum initial coefficient of friction was 0.094, which was lower compared to when the amount of added kish graphite was 0, 0.5 and 1.0 wt%, thus exhibiting low abrasion of the sample upon initial operation.

Although not shown in FIG. 4, when the amount of kish graphite was 6.0 wt%, abrasion of the sample occurred easily, undesirably deteriorating the sinterability of the sample.

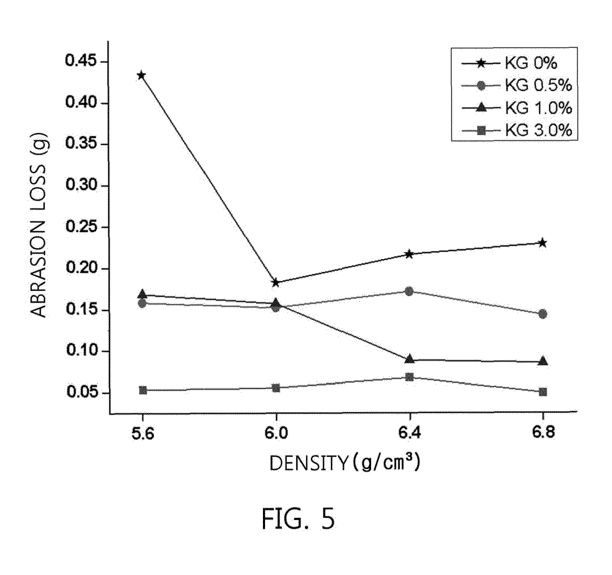

FIG. 5 illustrates the hardness and abrasion loss of the samples of Examples 1 to 4 depending on changes in the amount of added kish graphite and in the density of the sample.

In FIG. 5, the abrasion loss based on the difference in the weight of the sample before and after an abrasion test for 1 hr is depicted.

As illustrated in FIG. 5, the samples containing 0.5 - 3.0 wt% of kish graphite were lower in abrasion loss compared to the sample without kish graphite. When the amount of added kish graphite was 3.0 wt%, abrasion loss was 0.049 - 0.067 g, which was evaluated to be the lowest among all the density conditions.

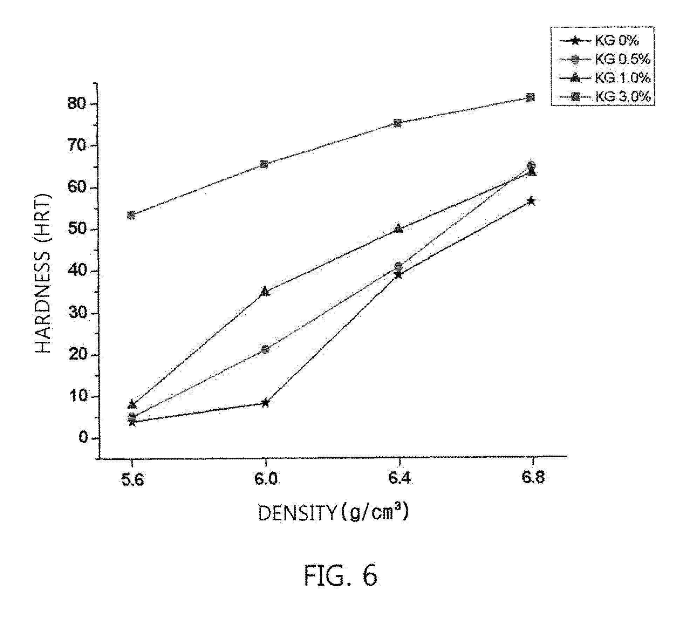

FIG. 6 illustrates the hardness of the sintered sample depending on the amount of added kish graphite.

As illustrated in FIG. 6, the hardness of the sample was increased in proportion to an increase in the amount of added kish graphite. This is because carbon is dispersed in the pure iron-based master alloy in proportion to an increase in the amount of kish graphite in the pure iron-based sample, thus enhancing the strength of the sample.

### <Example 5>

NC100.24 powder as pure iron powder, DMH powder comprising pure iron-25 wt% copper powder, kish graphite powder having a particle size of 300 *µ*m or less, and zinc stearate as a lubricant were mixed, thus preparing a powder mixture of Table 5 below.

Mixing was performed using a high-speed mixer at a rotation rate of 100 rpm for 10 min. The prepared powder mixture was subjected to pressing at room temperature using a 20-ton press, thus obtaining an abrasion resistance test sample having a compact density of 6.0 g/cm³ with a disc shape.

The disc shaped sample was sintered at 1000°C for 3 hr.

Table 5 below shows the composition of the sample of Example 5.

**[Table 5]**

| NC100.24 (wt%) | DMH (wt%) | Kish graphite (wt%) | Zinc stearate (wt%) | Density (g/cm³) | Note |
|---|---|---|---|---|---|
| 91.2 | 8.0 | 0 | 0.8 | 6.0 | |
| 90.2 | 8.0 | 1.0 | 0.8 | 6.0 | |
| 89.2 | 8.0 | 2.0 | 0.8 | 6.0 | |
| 88.2 | 8.0 | 3.0 | 0.8 | 6.0 | |
| 87.2 | 8.0 | 4.0 | 0.8 | 6.0 | |
| 81.2 | 8.0 | 10.0 | 0.8 | 6.0 | Deteriorated Sinterability |

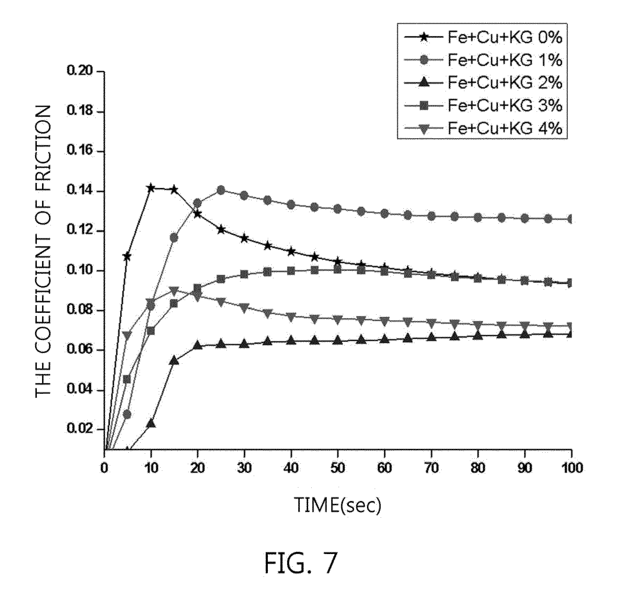

FIG. 7 illustrates the coefficient of friction upon initial operation of the sample of Table 5.

As is apparent from Table 5 and FIG. 7, when the amount of added kish graphite was 2.0 wt%, the maximum initial coefficient of friction was 0.063, which was lower compared to when the amount of added kish graphite was 0, 1.0, 3.0 and 4.0 wt%, thus exhibiting low abrasion of the sample upon initial operation.

When comparing the amounts of kish graphite in the pure iron-based samples of Examples 1 to 4 and the iron-copper-based sample of Example 5, the amount of added kish graphite should be appropriately adjusted depending on the composition of metal powder.

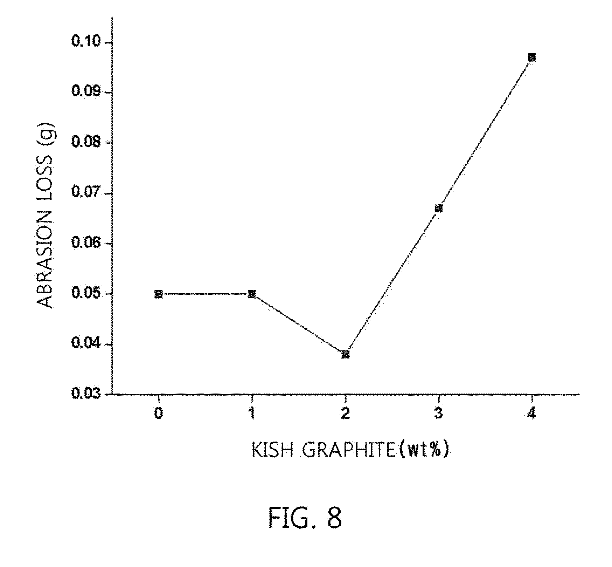

FIG. 8 illustrates the abrasion loss based on the difference in the weight of the sample before and after an abrasion test for 1 hr.

As illustrated in FIG. 8, when 2 wt% of kish graphite was added to the iron-copper-based alloy, abrasion loss was 0.038 g which was evaluated to be the lowest, and then abrasion loss was increased in proportion to an increase in the amount of kish graphite.

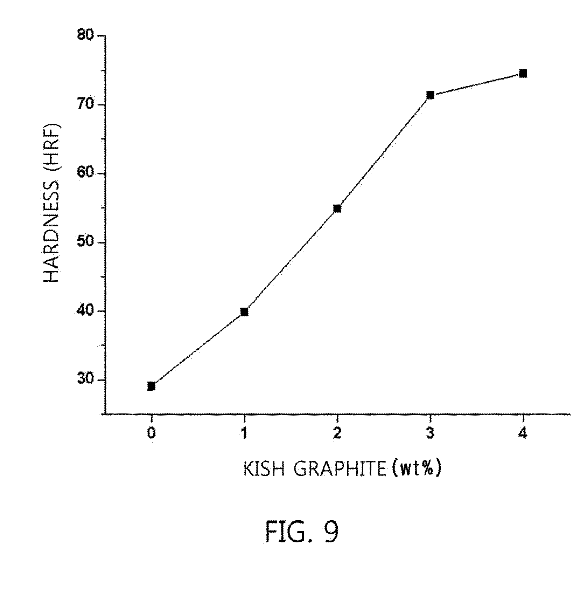

FIG. 9 illustrates the hardness of the sintered sample depending on the amount of added kish graphite.

As illustrated in FIG. 9, the hardness of the sample was increased in proportion to an increase in the amount of kish graphite in the iron-copper-based alloy. This is because carbon of kish graphite is dispersed in the iron-copper-based master alloy as the amount of kish graphite added to the iron-copper-based alloy increases, thus enhancing the strength of the sample.

Consequently, in the iron-copper-based sintered bearing, when kish graphite was contained in an amount of 2.0 wt%, not only initial lubricity but also effects of enhancing strength and reducing abrasion loss were superior.

Thereby, upon manufacturing the sintered bearing, kish graphite is added in an amount of 0.01 ∼ 10 parts by weight so that abrasion resistance of the sintered bearing is enhanced and lubricity is imparted, resulting in a sintered bearing having high durability.

The scope of the present invention is not limited to the above examples but rather is defined as disclosed in the accompanying claims, and those skilled in the art will appreciate that various modifications and adaptations are possible, without departing from the scope described in the claims.

### Industrial Applicability

The present invention can provide a high-quality sintered bearing for automobile industries and a variety of equipment industries. Because kish graphite which is a byproduct of iron production can be recycled upon manufacturing the sintered bearing, the method of the invention is favorable in terms of reducing the manufacturing cost and is eco-friendly.

## Claims

1. A sintered bearing, comprising metal powder, kish graphite, and a lubricant.

2. The sintered bearing of claim 1, comprising, based on a total weight thereof, 0.01 - 10 parts by weight of the kish graphite, 0.01 - 1.0 parts by weight of the lubricant, and a balance of the metal powder.

3. The sintered bearing of claim 1 or 2, wherein the metal powder is one or more selected from the group consisting of a pure iron system, an iron-copper system, an iron-carbon system, an iron-carbon-copper system, a bronze system, and an iron-carbon-copper-nickel system.

4. The sintered bearing of claim 1, wherein the kish graphite is a byproduct of iron production.

5. A method of manufacturing a sintered bearing, comprising:
mixing metal powder, kish graphite, and a lubricant, thus forming a powder mixture;
applying pressure to the powder mixture, thus forming a molded body;
sintering the molded body, thus forming a sintered body; and
impregnating the sintered body with oil.

6. The method of claim 5, wherein the powder mixture comprises, based on a total weight thereof, 0.01 - 10 parts by weight of the kish graphite, 0.01 ∼ 1.0 parts by weight of the lubricant, and a balance of the metal powder.

7. The method of claim 5 or 6, wherein the metal powder is one or more selected from the group consisting of a pure iron system, an iron-copper system, an iron-carbon system, an iron-carbon-copper system, a bronze system, and an iron-carbon-copper-nickel system.

8. The method of claim 5, wherein the kish graphite is in a powder form having a particle size of 50 mesh or less.

9. The method of claim 5, wherein the kish graphite has a purity of 90 - 100% after refining.

10. The method of claim 5, wherein the lubricant is any one or a mixture of two or more selected from the group consisting of zinc stearate (C₃₆H₇₀O₄Zn), Acrawax (C₃₈H₇₆N₂O₂), and Kenolube paraffin.

11. The method of claim 5, wherein the forming the molded body is performed by subjecting the powder mixture to pressing at a pressure of 50 - 350 MPa at room temperature.

12. The method of claim 5, wherein the forming the molded body is performed so that the molded body has a compact density of 5.4 ∼ 7.0 g/cm³.

13. The method of claim 5, wherein the forming the sintered body is performed at 850 - 1300°C under atmospheric pressure.

14. The method of claim 5, wherein the forming the sintered body is performed for 1 - 6 hr.

15. The method of claim 5, wherein the impregnating with oil is performed at 50 - 150°C in a vacuum.
